Europäisches Patentamt

European Patent Office

Office européen des brevets

(11) Veröffentlichungsnummer: **0 259 630**
A1

(12) **EUROPÄISCHE PATENTANMELDUNG**

(21) Anmeldenummer: 87111572.1

(22) Anmeldetag: 10.08.87

(51) Int. Cl.³: **H 01 G 4/30**
H 01 G 4/32, H 01 G 4/14

(30) Priorität: 02.09.86 DE 3629837

(43) Veröffentlichungstag der Anmeldung:
16.03.88 Patentblatt 88/11

(84) Benannte Vertragsstaaten:
AT BE CH DE ES FR GB IT LI NL SE

(71) Anmelder: Siemens Aktiengesellschaft Berlin und
München
Wittelsbacherplatz 2
D-8000 München 2(DE)

(72) Erfinder: Behn, Reinhard, Dipl.-Phys.
Frasdorferstrasse 6d
D-8000 München 90(DE)

(54) Elektrischer Kondensator aus einem verfestigten Wickel oder verfestigten Stapel von aneinander geschichteten metallisierten Kunststofflagen und Verfahren zu seiner Herstellung.

(57) Der Kondensator aus einem verfestigten Wickel oder verfestigten Stapel (1) von mit Metallschichten als Belegungen (2,3) versehenen, aneinandergeschichteten Kunststofflagen (4,5), der an einer Schmalseite einen Einschnitt (10) aufweist, durch den die einzelnen Kunststofflagen (4,5) Vorsprünge (8,9) erhalten, auf denen abwechselnd von Lage zu Lage die Belegungen (2,3) durch Isolierstreifen (18,19) unterbrochen sind, und die auf den von den Vorsprüngen (8,9) gebildeten Flächen (11,12) befindlichen Metallisierungen (13,14) gegenpolige Belegungen alternierend miteinander verbinden, besteht aus Kunststofflagen (4,5) die beidseitig mit Metallschichten versehen sind, auf denen extrem dünne Kunststoffschichten (29,30) aufgetragen sind. Das Verfahren sieht vor, die Kunststoffbänder mit den metallfreien Isolierstreifen zu versehen und dabei oder danach auf eine Trommel aufzuwickeln, wonach die Einschnitte (10) erzeugt und davor oder danach die einzelnen Stapel (1) abgetrennt werden.

Croydon Printing Company Ltd.

./...

FIG 5

Siemens Aktiengesellschaft
Berlin und München

Unser Zeichen:
VPA  86 P 1 5 7 5 E

0259630

Elektrischer Kondensator aus einem verfestigten Wickel oder verfestigten Stapel von aneinander geschichteten metallisierten Kunststofflagen und Verfahren zu seiner Herstellung

Die Erfindung betrifft einen elektrischen Kondensator aus einem verfestigten Wickel oder verfestigten Stapel von mit regenerierfähig dünnen Schichten aus Ventilmetall als Belegungen versehenen, aneinandergeschichteten Kunststofflagen,

- bei dem die Belegungen von Lage zu Lage abwechselnd bis zu den Enden von zwei Vorsprüngen reichen, die durch einen Einschnitt entstanden sind, der in Richtung der Dicke des Wickels oder des Stapels und etwa in der Mitte einer Seite desselben verläuft,
- bei dem die von den Enden der Vorsprünge im verfestigten Wickel oder Stapel gebildeten Flächen mit zur Kontaktierung dienenden und durch Metallspritzen hergestellten Metallschichten versehen sind, die die Belegungen miteinander verbinden und zum Befestigen äußerer Stromzuführungen dienen,
- bei dem die Belegungen die Flächen der Kunststofflagen praktisch bis zu den Rändern an den Längsseiten sowie bis zu den beiden Enden der Vorsprünge und gegebenenfalls bis zum Rand der oberen Schmalseite des Stapels, die der den Einschnitt enthaltenden Schmalseite gegenüberliegt, bedecken,
- bei dem die Vorsprünge alternierend von Kunststofflage zu Kunststofflage mit metallfreien Isolierstreifen und Restmetallstreifen versehen sind und
- bei dem die Tiefe des Einschnittes entweder größer ist als die Breite der Restmetallstreifen oder vorzugsweise mit

den inneren Rändern der Isolierstreifen zusammenfällt oder über diese Ränder hinaus in den Wickel oder in den Stapel in Richtung seiner Längsachse hineinreicht.

Die Erfindung betrifft ferner ein Verfahren zur Herstellung eines solchen Kondensators, bei dem zwei regenerierfähig dünn metallisierte Bänder als Kunststofflagen, insbesondere mit randseitigem Wellenschnitt, auf einer Trommel zu einem Ausgangskondensator geschichtet werden und der Ausgangskondensator senkrecht zu den Schichtebenen in die gewünschten Einzelkondensatoren aufgeteilt wird, wobei gegebenenfalls bei einer Anzahl jeweils einen Mutterkondensator bildender Kunststofflagen und Belegungen kapazitiv nicht wirksame Decklagen, darauf Trennlagen und erneut Decklagen und darauf wieder die Kunststofflagen mit den Belegungen für den nächsten Mutterkondensator angeordnet werden und der so entstandene Ausgangskondensator mit Stirnkontaktschichten versehen und danach im Bereich der Zwischenlagen und in dazu senkrechter Richtung geteilt wird, mit den Verfahrensschritten:

a) die beiden metallisierten Bänder werden mittels Laserstrahlen in den Bereichen der Ränder und in Abständen hierzu in Wickelrichtung mit intermittierenden metallfreien Isolierstreifen vor oder beim Aufwickeln derart versehen, daß die Isolierstreifen beim Aufwickeln auf die Trommel in einer Ebene senkrecht zur Wickelachse liegen und sowohl die Enden als auch die Anfänge der Isolierstreifen bis in den Bereich des späteren Einschnittes hineinreichen oder diesen Bereich geringfügig überschreiten,

b) die Bänder werden beim Aufwickeln auf die Trommel so geführt, daß die Mitten der Isolierstreifen des oberen Bandes symmetrisch über den Mitten der Zwischenräume zwischen den Isolierstreifen des unteren Bandes in den fertigen Mutterkondensatoren angeordnet sind,

c) nach dem Aufwickeln und Verfestigen der Ausgangskondensatoren bzw. Mutterkondensatoren werden noch auf der Trommel zumindest die aus den Rändern gebildeten Stirn-

flächen durch Metallspritzen mit je einer Metallschicht versehen,

d) vor oder nach dem Auftrennen in einzelne Mutterkondensatoren werden senkrecht zur Wickelrichtung in der Mitte zwischen je zwei Schneidlinien von beiden Seiten des Mutterkondensators Einschnitte erzeugt, durch deren Breite und Tiefe die beiden Vorsprünge entstehen,

e) Abtrennen der einzelnen Kondensatoren, gegebenenfalls nach Befestigen von Stromzuführungen, durch isolierende Sägeschnitte sowohl längs von Schneidlinien, die durch die Mitten der Isolierstreifen gehen, als auch längs einer Schneidlinie, die parallel zu den Rändern in der Mitte des Mutterkondensators liegt,

f) Fertigstellung der Kondensatoren durch Anbringen von kappenförmigen oder anderen Stromzuführungen sofern diese nicht schon im Verfahrensschritt e) befestigt wurden.

Kondensatoren, die alle diese eingangs genannten Merkmale aufweisen und Verfahren mit den angegebenen Verfahrensschritten sind bezüglich Stapelkondensatoren ausführlich und unter Würdigung eines umfangreichen Standes der Technik in der DE-OS 33 42 329 beschrieben, der die europäische Anmeldeschrift EP-A3-0 144 857 und die US-PS 4 563 724 entsprechen. Entsprechende Wickelkondensatoren und Verfahren zu ihrer Herstellung sind in der DE-OS 35 17 435 und der hierzu korrespondierenden EP-A3 0 201 771 und US-PS 4 639 832 beschrieben.

Die im Hinblick auf die vorliegende Erfindung unter anderem verwendeten und nachfolgend angegebenen Begriffe sind in der US-PS 4 563 724 an den jeweils angegebenen Stellen ausführlich erläutert.

Dabei handelt es sich um die Begriffe "isolierender Sägeschnitt" (vgl. US-PS, Spalte 3, Z. 18 bis 28 und Spalte 7, Z. 3 bis 11 und Z. 60 bis 65), "Wellenschnitt" (vgl. Spalte 3, Z. 50 bis 62 und Spalte 8, Z. 55 bis 65), "Decklagen" (vgl. Spalte 7, Z. 42 bis 47), "Regenerierfähigkeit" (vgl. Spalte 2, Z. 38 bis 46), "Schoopverfahren" (vgl. Spalte 9, Z. 13 bis 19 und Spalte 10, Z. 49 bis 52) sowie "Synchronsteuerung der Laserstrahlimpulse" (vgl. Spalte 11, Z. 27 bis 33).

Der wie angegeben, bekannte Kondensator und das zu seiner Herstellung ebenfalls bekannte Verfahren weisen eine Reihe von gravierenden Vorteilen auf, die in der US-PS 4 563 724 in Spalte 4, Z. 47 bis 53, Spalte 7, Z. 12 bis 21, Spalte 10, Z. 24 bis 35 und Z. 63 bis 68 beschrieben sind und im wesentlichen darin bestehen, daß ein weitgehend induktionsarmer Kondensator erzielt wird, der für ein Rastermaß von 2,5 mm geeignet ist, bei dessen Herstellung die Breite der aufzuwickelnden Bänder keiner fertigungsbedingten Einschränkung unterliegen und der in besonders wirtschaftlicher Weise in extrem hohen Stückzahlen gefertigt werden kann.

Trotz aller dieser Vorteile kann es erforderlich sein, die Volumenkapazität eines solchen Kondensators noch weiter zu erhöhen, um in möglichst kleinen Volumina sehr hohe Kapazitäten unterzubringen.

Dieses Erfordernis wurde bei bekannten Wickel- oder auch Stapelkondensatoren bereits durch die Anwendung extrem dünner Dielektrikumsschichten, beispielsweise in Form von Lackschichten oder von durch Glimmpolymerisation von Monomeren aus der Gasphase erzeugten Kunststoffschichten, erfüllt, jedoch gibt der in diesem Zusammenhang bekannte Stand der Technik keinen Hinweis darauf, wie man einen eingangs angegebenen induktionsarmen Kondensator aufbauen muß, um mittels extrem dünner Dielektrikumsschichten eine hohe Volumenkapazität zu erzielen.

Der in diesem Zusammenhang relevante Stand der Technik legt somit weder den konstruktiven Aufbau noch das Herstellungsverfahren für einen derartigen verbesserten Kondensator nahe.

So ist beispielsweise aus der US-PS 3 252 830 ein elektrischer Kondensator und ein Verfahren zu seiner Herstellung bekannt, bei dem auf einer Trägerfolie zunächst eine Metallschicht aufgetragen wird, die im Bereich eines Randes einen metallfreien Streifen freiläßt. Auf diese erste Metallschicht wird durch Glimmpolymerisation diverser dort angegebener Kunststoffmaterialien eine Dielektrikumsschicht erzeugt, die die erste Metallschicht und den metallfreien Randstreifen vollständig bedeckt. Darauf wird wiederum eine zweite Metallschicht aufgetragen, die nun am gegenüberliegenden Rand einen metallfreien Streifen freiläßt. Das derartige vorbereitete Trägerband wird zu einem normalen Wickelkondensator aufgewickelt und stirnseitig in für diese Fälle üblicher Weise kontaktiert. Dieser elektrische Wickelkondensator weist somit zwei in Achsrichtung verlaufende Stromzuführungsdrähte auf. Es ist in der genannten Patentschrift (vgl. Spalte 6, Z. 7 bis 15) auch der Hinweis enthalten, daß verschiedene andere Formen als gewickelte, flache oder Vielschichtkonstruktionen möglich sind, wofür als Beispiel für einen Niederspannungskondensator mit hoher Kapazität flache Vielschichtkondensatoren verwendet werden könnten, bei denen eine Parallelschaltung verwirklicht ist, während für Hochspannungskondensatoren eine entsprechende Serienschaltung empfohlen wird. Einen Hinweis auf niederinduktive Kondensatoren der eingangs angegebenen Art und das Herstellungsverfahren mit allen Vorteilen erhält der Fachmann selbst bei Kenntnis der oben erläuterten US-PS 4 563 724 nicht.

In gleicher Weise verhält es sich mit der US-PS 3 069 283, in der ein rationelleres Verfahren zur Herstellung von Wickelkondensatoren beschrieben ist, indem nämlich nicht ein einzelnes Trägerband vorbehandelt wird, sondern ein Trägerband, dessen Breite ein Vielfaches der für den späteren Wickelkondensator benötigten Breite beträgt.

Bei dieser rationalisierten Herstellung werden auf die Trägerfolie zunächst, unter Anwendung von Masken, in Bandrichtung verlaufende Streifen aufgetragen, die Zwischenflächen freilassen. Auf diese Streifen werden dann unter Berücksichtigung bestimmter gegenseitiger Versetzungen durch Glimmpolymerisation extrem dünne Kunststoffschichten, ebenfalls in Streifenform, aufgetragen. Schließlich wird erneut, ebenfalls unter Berücksichtigung bestimmter Versetzungen, Metall für die Gegenelektroden in Streifenform aufgetragen. Das so vorbereitete Band wird dann in Bandrichtung in einzelne Bänder zerteilt, aus denen dann einzelne Wickelkondensatoren hergestellt werden.

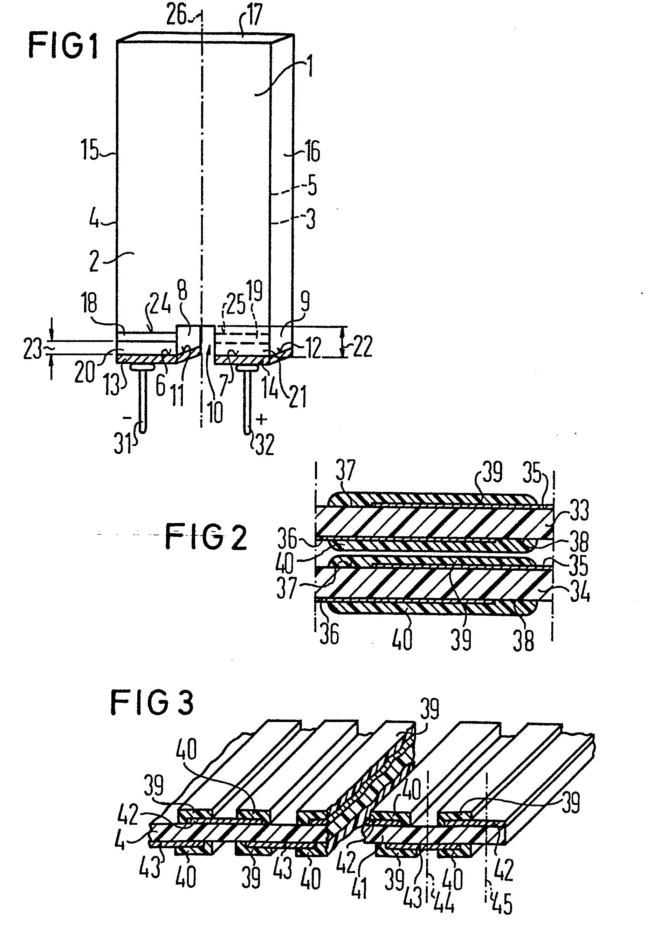

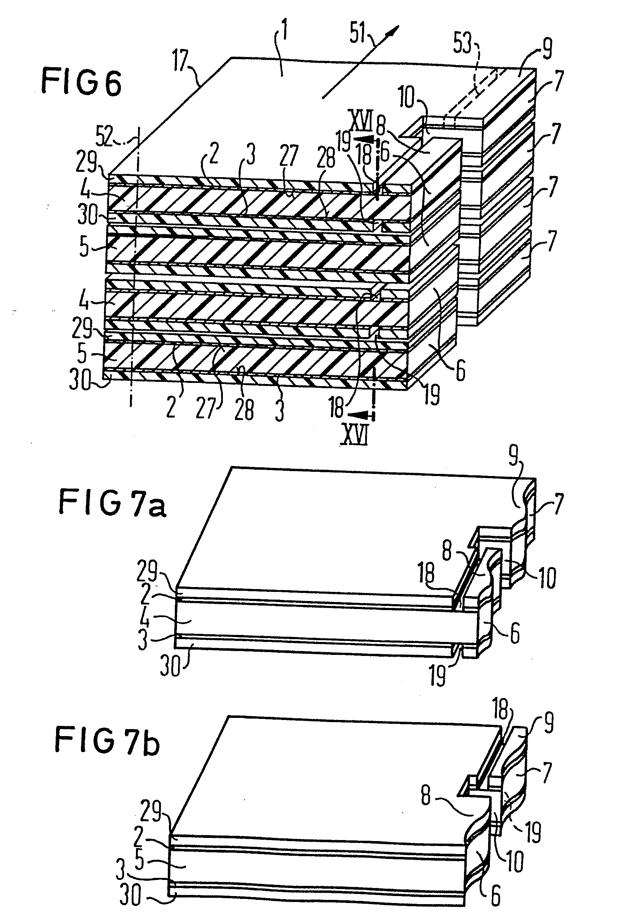

In der japanischen Zeitschrift "National Technical Report", Vol. 26, No. 2, April 1980, S. 231 bis 236 ist ein Kondensator mit der Bezeichnung "TF-Capacitor ECQ-V" beschrieben, dessen Herstellungsweise und dessen Aufbau im Zusammenhang mit den beiliegenden Fig. 2, 3, und 4 erläutert werden. Bei diesem Kondensator handelt es sich um einen normalen Stapelkondensator, der - mit Ausnahme der zusätzlich vorhandenen extrem dünnen Lackschichten - als Stand der Technik bei der Erfindung gemäß US-PS 4 563 724 vorausgesetzt wurde (vgl. dort Spalte 7, Z. 39 bis 65 und Fig. 5).

Im Gegensatz zu den erläuterten Kondensatoren mit extrem dünnen Kunststoffschichten aus Glimmpolymerisat enthalten die bekannten "TF-Capacitors" als extrem dünne Schichten solche aus Lack, insbesondere Polycarbonatlack, und liegen die Trägerkörper im Feldraum, weil an gegenüberliegenden Rändern des Trägers metallfreie Isolierstreifen vorhanden sind. Wegen der im Verhältnis zu den Lackschichten erheblich dickeren Trägerschichten oder bei Verwendung ebenfalls dünner Trägerschichten ist der verringernde Einfluß auf die Volumenkapazität jedoch nicht sehr groß und wird in Kauf genommen.

Die genannte Zeitschrift gibt somit weder für sich noch im Zusammenhang mit anderem Stand der Technik einen Hinweis auf induktionsarme Kondensatoren mit erhöhter Volumenkapazität.

In der DE-AS 22 27 751, entsprechend der US-PS 3 855 507, ist ein elektrischer Wickel- oder Stapelkondensator und sind Verfahren zu seiner Herstellung beschrieben, der regenerierfähig ist, beidseitig metallisierte Trägerfolien im feldfreien Raum besitzt, auf denen unterhalb der Metallbelegungen Zwischenschichten und oberhalb der Metallbelegungen extrem dünne, durch Lackierung hergestellte Dielektrikumsschichten aus Kunststoff enthält, die die Metallbelegungen bis zum Rand bedeckend bis zu den Stirnseiten reichen können.

Die für die Stirnkontaktschichten aufzutragenden Metalltröpfchen durchdringen nämlich die extrem dünnen Dielektrikumsschichten aufgrund ihrer kinetischen Energie und ihrer Temperatur ohne weiteres. Dennoch müssen diese Kondensatoren alternierend an gegenüberliegenden Stirnflächen Randbereiche aufweisen, die vom Metall der Belegungen frei sind, so daß auch diese Veröffentlichung keinen Hinweis gibt, wie vorzugehen ist, um induktionsarme Kondensatoren der hier in Rede stehenden Art zu erhalten.

Der vorliegenden Erfindung liegt die Aufgabe zugrunde, die bekannten niederinduktiven Stapelkondensatoren derart weiterzubilden, daß eine erhöhte Volumenkapazität erzielt wird und dabei alle elektrischen, konstruktiven und verfahrensmäßigen Vorteile erhalten bleiben; ferner gehört es zur Aufgabe der Erfindung, ein Verfahren zur Herstellung eines solchen Kondensators anzugeben, das ebenso einfach durchzuführen ist, wie das bekannte Verfahren und das dennoch zu niederinduktiven Kondensatoren mit erhöhter Volumenkapazität führt.

Zur Lösung dieser Aufgabe ist der Kondensator der eingangs angegebenen Art erfindungsgemäß gekennzeichnet durch folgende Merkmale:

a) auf beiden Oberflächen einer jeden Kunststofflage sind regenerierfähig dünne Metallschichten als Belegungen vorhanden und

b) auf einer oder auf beiden Belegungen jeder Kunststofflage oder auf beiden Belegungen jeder zweiten Kunststofflage ist eine extrem dünne Kunststoffschicht als Dielektrikum vorhanden, die die Belegung vollständig bedeckt, sich bis in den Bereich der Restmetallstreifen erstreckt und oberhalb der Isolierstreifen wenigstens teilweise entfernt ist.

Neben den bereits bei der Schilderung des Standes der Technik erläuterten Vorteilen für einen niederinduktiven Kondensator bietet der Kondensator der vorliegenden Erfindung die weiteren Vorteile, daß eine erhebliche Erhöhung der Volumenkapazität erzielt wird und daß die regenerierfähig dünnen Metallschichten die beiden Oberflächen einer jeden Kunststofflage zunächst vollständig bedecken können, so daß bei der Vorbereitung der einzelnen Bänder Schablonen und Abdeckungen beim Auftragen der Metallschichten nicht mehr erforderlich sind. Ferner bietet der Kondensator den zusätzlichen Vorteil, daß auch die extrem dünne Kunststoffschicht unter gewissen Voraussetzungen die Metallschicht vollständig bedecken kann, so daß auch hier der herstellungsbedingte Vorteil der Vermeidung von Schablonen und Abdeckungen resultiert. In beiden Fällen, besonders aber bei der vollständigen Metallisierung beider Oberflächen der Bänder, tritt ferner das Problem des Einhaltens von Schneidtoleranzen innerhalb der durch Abdeckung erzeugten Streifen nicht auf.

Vorteilhafterweise sind die extrem dünnen Kunststoffschichten durch einen Lackiervorgang hergestellt und bestehen aus Acetylcellulose, Polycarbonat oder Expoxidharzlack.

- 9 -    VPA    86 P 1 5 7 5 E

Besonders vorteilhaft ist es, wenn die extrem dünnen Kunststoffschichten durch Glimmpolymerisation hergestellt sind und beispielsweise aus einer Mischung von perfluorierten und reinen Kohlenwasserstoffen bestehen.

Die extrem dünne Kunststoffschicht weist eine Dicke von 0,1 bis 2,0 µm, vorzugsweise 0,7 µm, bei Lackschichten und von 0,05 bis 0,7 µm, vorzugsweise 0,2 µm, bei Glimmpolymerisationsschichten auf.

Die Dicke der Kunststofflagen beträgt 1 bis 15 µm, vorzugsweise 2 µm. Als Materialien für diese Kunststofflagen eignen sich z. B. Polyethylenterephthalat, Polypropylen, Polyphenylensulfid (PPS), Polyimide allein oder Copolymerisate von Polyimiden mit Polyamiden und ähnliche Kunststoffe.

Gemäß einer Weiterbildung der Erfindung befinden sich auf jeder Kunststofflage die ersten Isolierstreifen auf einem Vorsprung und die zweiten Isolierstreifen auf der diametral entgegengesetzten Seite des anderen Vorsprunges. In diesem Fall, der besonders bei sehr dünnen Kunststofflagen anwendbar ist, liegen die Kunststofflagen ebenso wie die Dielektrikumsschichten im Feldraum. Diese Ausführungsform wird im Zusammenhang mit den Fig. 5, 14 und 15 erläutert.

Eine bevorzugte Weiterbildung der Erfindung besteht darin, daß jeweils auf einer Kunststofflage sowohl der erste Isolierstreifen als auch der zweite Isolierstreifen sich zu beiden Seiten des einen Vorsprunges befinden, während jeweils auf der nächsten Kunststofflage sowohl der erste Isolierstreifen als auch der zweite Isolierstreifen sich zu beiden Seiten des anderen Vorsprunges befinden.

In diesem Fall, der im Zusammenhang mit den Fig. 6 und 16 bis 18 erläutert wird, befinden sich die Kunststofflagen im feldfreien Raum. Diese Ausführungsform ist besonders dann von Vorteil, wenn die Dielektrikumsschichten besonders dünn sind und z.B. aus Glimmpolymerisat bestehen.

Eine besonders vorteilhafte Ausführungsform der Erfindung besteht darin, daß die extrem dünne Kunststoffschicht bis zu den Enden der Vorsprünge reicht und die Schnittkante der Vorsprünge wenigstens an jeder zweiten Kunststofflage als Wellenschnitt ausgeführt ist.

Während bei anderen Ausführungsformen der vorliegenden Erfindung die an sich bekannte Anwendung von Wellenschnitten an den die Stirnfläche bildenden Rändern der Kunststofflagen nicht zur Erhöhung der Kontaktsicherheit zwingend ist, jedoch mit Vorteil angewendet werden kann, wenn eine seitliche Versetzung der Folien, wie aus der US-PS 3 855 507 bekannt, nicht ausreichend ist, ist für die hier angegebene Ausführungsform, bei der die extrem dünne Kunststoffschicht bis zu den Enden der Vorsprünge reicht, der Einsatz von Wellenschnittkanten zwingend erforderlich.

Eine besonders vorteilhafte Ausführungsform der Wellenschnittkanten ist in der DE-OS 35 10 518 (vgl. US-PS 4 635 164) beschrieben und kann im vorliegenden Fall eingesetzt werden. Bei dieser Ausführungsform sind die Wellenschnittkanten nur an jeder zweiten Kunststofflage vorhanden, wobei durch entsprechende seitliche Versetzung der Kunststofflagen gegeneinander ausreichend Möglichkeiten bestehen, daß die Metalltröpfchen der Kontaktierungsschichten an der Stirnseite die jeweiligen Metallschichten der Belegungen erreichen können.

Bei einer anderen Ausführungsform der Erfindung reichen die Belegungen jeder Kunststofflage nicht bis an die obere Schmalseite und lassen damit an der dort entstehenden Stirnfläche einen Isolierstreifen frei, der bis zu einer Grenzlinie reicht. Diese Ausführungsform hat dann Bedeutung, wenn an dieser Schmalseite kein isolierender Sägeschnitt erfolgt und/oder wenn die Festigkeit des verfestigten Stapels durch einen Schoopvorgang auch an der der Kontaktierungsstirnfläche gegenüberliegenden Stirnfläche erhöht werden soll. Ohne solche Isolierstreifen an dieser Schmalseite würden durch Metallspritzen aufgetragene Schichten den Kondensator vollständig kurzschließen.

In allen Fällen der vorliegenden Erfindung ist es vorteilhaft, wenn der verfestigte Stapel oberhalb seiner außen liegenden Kunststofflagen mit je wenigstens einer Decklage versehen ist, die ebenso aufgebaut ist, wie die Kunststofflagen, bei der jedoch jeweils auf beiden Seiten beider Vorsprünge Isolierstreifen vorhanden sind.

Diese Art der Herstellung von Decklagen ist in der DE-OS 35 17 243 (angemeldet am 13.05.1985) ausführlich beschrieben und besteht darin, daß beim Herstellungsverfahren der Ausgangs- bzw. Mutterkondensatoren zunächst für die Kunststofflagen vorbereitete Bänder aufgewickelt werden, bei denen auf beiden Seiten durchgehend metallfreie Streifen erzeugt werden, und zwar solange, bis wenigstens eine oder zwei vollständige Umdrehungen der Trommel abgelaufen sind. Danach werden die intermittierenden metallfreien Isolierstreifen in der angegebenen Weise erzeugt und schließlich wird erneut wenigstens für eine oder zwei Umdrehungen der Trommel durchgehend entmetallisiert.

Das eingangs angegebenen Verfahren zur Herstellung eines Kondensators nach der Erfindung ist erfindungsgemäß dadurch gekennzeichnet, daß für die Kunststofflagen wenigstens ein gegenüber der später erforderlichen Breite wesentlich breiteres Band vorbereitet wird, in dem es beidseitig vollständig mit regenerierfähig dünnen Metallschichten (Al oder Zn oder Legierungen hiervon) als Belegungen versehen wird, wonach auf die gesamte Oberfläche wenigstens einer dieser Metallschichten eine extrem dünne Kunststoffschicht nach an sich bekannten Verfahren durch einen Lackiervorgang oder durch Glimmplymerisation aufgetragen wird und dieses derart vorbereitete Band dann in einzelne Bänder mit der für das Trommelwickeln vorgesehenen Breite durch in Bandrichtung verlaufende Schnitte geteilt wird, wofür vorzugsweise eine an sich bekannte Schneidvorrichtung benutzt wird, die Wellenschnittkanten erzeugt.

Eine Weiterbildung des Verfahrens besteht darin, daß die auf wenigstens eine Metallschicht aufzutragende, extrem dünne Kunststoffschicht in Form von in Längsrichtung des Bandes verlaufenden und Zwischenflächen freilassenden Streifen aufgetragen wird und das Band dann in den Mitten der Zwischenflächen in die einzelnen Bänder aufgeteilt wird, die von der Kunststoffschicht freie Randbereiche aufweisen.

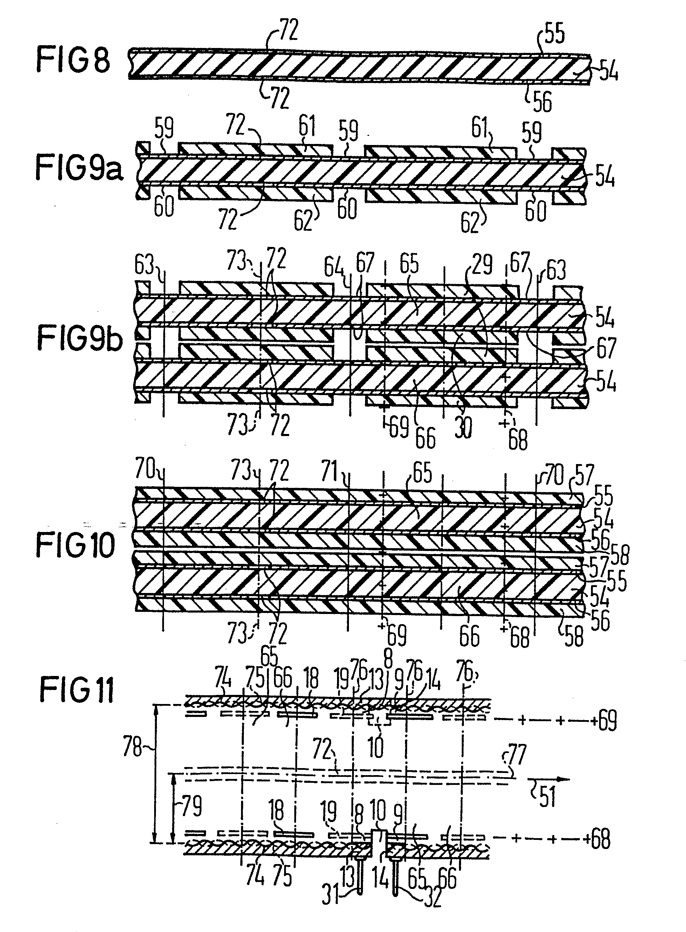

Diese Verfahrensvariante wird im Zusammenhang mit den Fig. 8, 9a und 9b erläutert.

Eine andere Variante des Verfahrens besteht darin, daß die auf das breite Band aufzutragenden Metallschichten in Form von in Längsrichtung des Bandes verlaufenden und Zwischenflächen freilassenden Streifen aufgetragen wird, die einander gegenüberliegen, und das Band dann in den Mitten der Zwischenflächen und in den Mitten zwischen den Zwischenflächen in die einzelnen Bänder aufgeteilt wird.

Diese Variante des Verfahrens dient zur Herstellung von Kondensatoren, die im Zusammenhang mit den Fig. 5, 8, 9a, 9b und 10 erläutert werden.

Sofern die wesentlich breiteren Bänder beidseitig vollständig mit regenerierfähig dünnen Metallschichten versehen werden und auch die extrem dünnen Kunststoffschichten die Metallschichten vollständig bedecken, sind die Vorteile des Verfahrens bei den Kondensatoren der Erfindung selbst bereits oben erläutert.

Sofern die auf wenigstens eine Metallschicht aufzutragende extrem dünne Kunststoffschicht in Form von in Längsrichtung des Bandes verlaufenden Zwischenflächen freilassenden Streifen aufzutragen ist, so resultiert der Vorteil, daß dann an den sich aus den Rändern der Kunststofflagen ergebenden Stirnflächen des Kondensators eine zuverlässige Kontaktierung erreicht wird. Dies gilt insbesondere für die Fälle, daß die extrem dünne Kunststoffschicht durch einen Lackiervorgang in nicht besonders geringer Dicke aufgetragen ist.

Sofern die auf das breite Band aufzutragende Metallschicht in Form von in Längsrichtung des Bandes verlaufenden und Zwischenflächen freilassenden Streifen aufzutragen ist, wofür Schablonen oder Abdeckungen erforderlich sind, resultieren dennoch die Vorteile, daß diese metallfreien Isolierstreifen an die der der Kontaktierung dienenden Stirnfläche gegenüberliegenden Stirnfläche gelangen, so daß dort zur Verfestigung des Stapels ebenfalls eine Metallschicht durch Metallspritzen (Schoopverfahren) aufgetragen werden kann, oder daß dort ein isolierender Sägeschnitt nicht vorgenommen zu werden braucht.

Die Erfindung ist zwar in erster Linie auf Stapelkondensatoren gerichtet, sie ist jedoch erkennbar auch bei Wickelkondensatoren anwendbar, die in der DE-OS 35 17 435 und in der korrespondierenden EP-PS 0 201 771 und US-PS 4 639 832 beschrieben sind, in denen auch die hierbei anwendbaren Verfahren erläutert sind.

Die Erfindung wird nachfolgend anhand der beigefügten Figuren näher erläutert. Es zeigen:

Fig. 1    einen Kondensator der Erfindung, jedoch ohne Umhül-

lung, die im Normalfall in bekannter Weise vorhanden ist.

Fig. 2    einen Ausschnitt aus einem Kondensator gemäß Stand der Technik;

Fig. 3    die Herstellung des Kondensators gemäß Stand der Technik für einen Kondensator nach Fig. 4;

Fig. 4    einen Kondensator, der zum Stand der Technik gehört;

Fig. 5    den konstruktiven Aufbau eines Kondensators nach der Erfindung;

Fig. 6    eine andere Ausführungsform des konstruktiven Aufbaus eines Kondensators nach der Erfindung;

Fig. 7a + 7b    zwei Lagen eines Kondensators nach Fig. 6;

Fig. 8    ein beidseitig metallisiertes Kunststoffband für das Herstellungsverfahren gemäß der Erfindung;

Fig. 9a + 9b    Stufen des Herstellungsverfahrens eines Kondensators nach der Erfindung gemäß Fig. 5;

Fig. 10    eine Stufe des Herstellungsverfahrens für einen Kondensator nach der Erfindung gemäß Fig. 6;

Fig. 11    die beiden übereinander angeordneten aufzuwickelnden Bänder der Kunststofflagen;

Fig. 12    das Wickelverfahren zur herstellung eines Kondensators nach der Erfindung;

Fig. 13    einen erheblich vergrößerten Schnitt durch den Sektor XIII in Fig. 12;

Fig. 14    einen Schnitt durch einen Kondensator in der Ebene längs der Linie XIV-XIV in Fig. 5;

Fig. 15    eine andere Ausführungsform für einen Kondensator gemäß Fig. 14;

Fig. 16    einen Schnitt durch den Kondensator in der Ebene längs der Linie XVI-XVI in Fig. 6;

Fig. 17    eine andere Ausführungsform des Kondensators nach Fig. 16 und

Fig. 18    wiederum eine andere Ausführungsform des Kondensators nach Fig. 16.

In Fig. 1 ist der verfestigte Stapel 1 gezeigt, der aus mit regenerierfähig dünnen Schichten aus Ventilmetall, beispielsweise Aluminium oder Zink oder Legierungen dieser Metalle, als Belegungen 2, 3 versehenen, aneinander geschichteten Kunststofflagen 4, 5 besteht. Durch den Einschnitt 10, der in Richtung der Dicke des Stapels 1, also senkrecht zur Zeichenebene hergestellt wurde und etwa in der Mitte einer Seite des Stapels 1 verläuft, sind zwei Vorsprünge 8, 9 entstanden. Jede Kunststofflage 4 und 5 besitzt dementsprechend ebenfalls diese Vorsprünge 8 und 9.

Alternierend von Kunststofflage 4 zu Kunststofflage 5 sind metallfreie Isolierstreifen 18, 19 vorhanden, so daß die Belegungen 2 auf den Kunststofflagen 4 von den verbliebenen Restmetallstreifen 20 elektrisch isoliert sind. In gleicher Weise sind die Belegungen 3 auf den Kunststofflagen 5 durch die Isolierstreifen 19 von den Restmetallstreifen 21 elektrisch isoliert. Jeweils auf dem anderen Vorsprung reichen die Belegungen 2 auf den Kunststofflagen 4 bzw. die Belegungen 3 auf den Kunststofflagen 5 bis zu den Enden 7 bzw. 6 der Vorsprünge 8 und 9 und sind dort auf den von den Enden 6 und 7 der Vorsprünge 8 und 9 im verfestigten Stapel 1 gebildeten Flächen 11 und 12 mit zur Kontaktierung dienenden und durch Metallspritzen hergestellten Metallschichten 13 und 14 versehen, die die Belegungen 2 bzw. die Belegungen 3 gleichpolig miteinander verbinden und zum Befestigen äußerer Stromzuführungen 31 und 32 dienen.

Diese Stromzuführungen können wie im gezeigten Ausführungsbeispiel als Stromzuführungsdrähte ausgebildet sein, es ist jedoch auch möglich, zum Verbinden mit den Leiterbahnen einer elektrischen Schaltung Kappen oder andere Formen von Stromzuführungen anzubringen.

Die Tiefe 22 des Einschnittes 10, gemessen von den Flächen 11 und 12 der Vorsprünge 8 und 9, ist so bemessen, daß die notwendige gegenseitige Isolation der Belegungen 2 bzw. 3 gegeneinander gewährleistet ist. Die Tiefe 22 ist somit zumindest größer als die Breite 23 der Restmetallstreifen 20 bzw. 21, oder die Tiefe 22 reicht bis zu den inneren Rändern 24 und 25 der Isolierstreifen 18 und 19. Vorzugsweise ist die Tiefe 22 jedoch größer als die Summe der Breite 23 der Restmetallstreifen 20 bzw. 21 und der Breite der metallfreien Isolierstreifen 18 bzw. 19. Die Tiefe 22 des Einschnittes 10 erstreckt sich in Richtung der Längsachse 26 des Stapels 1.

Auf den einzelnen Kunststofflagen 4 bzw. 5 bedecken die Belegungen 2 bzw. 3 die Flächen der Kunststofflagen 4, 5 praktisch bis zu deren Rändern an den Längsseiten 15 und 16, reichen gegebenenfalls bis zum Rand der oberen Schmalseite 17 des Stapels 1, sowie bis zu den beiden Enden 6, 7 der Vorsprünge 8, 9, sofern sie nicht durch die Isolierstreifen 18, 19 unterbrochen sind.

In den Fig. 2, 3 und 4 soll anhand der sogenannten "TF-Capacitors" der der vorliegenden Erfindung am nächsten kommende Stand der Technik erläutert werden.

Fig. 2 zeigt ausschnittsweise den Aufbau eines solchen Kondensators, wobei 2,5 µm dicke Kunststofflagen 33 und 34 beiderseits mit regenerierfähig dünnen Metallbelegungen 35 und 36 derartig versehen sind, daß an jeder Kunststofflage 33 bzw. 34 in diametral gegenüberliegenden Randbereichen metallfreie Isolierstreifen 37 und 38 vorhanden sind.

Die Belegungen 35 und 36 sind jeweils mit etwa 0.9 µm dicken Lackschichten 39 bzw. 40 als Dielektrikum überzogen. Diese Lackschichten 39 und 40 reichen rechts und links nicht bis zu Rändern der Kunststofflagen 33 und 34, wobei auch die metallfreien Isolierstreifen 37 und 38 noch mit Lackschichten überzogen sind.

Fig. 3 zeigt, daß ein Kunststoffband 41, das wesentlich breiter ist, als die später zu verwickelnden Bänder, zunächst von beiden Seiten mit streifenförmigen Metallschichten 42 und 43 versehen wird. Auf diese streifenförmigen Metallschichten 42 und 43 werden in einem weiteren Arbeitsgang dann von beiden Seiten die extrem dünnen Kunststoffschichten 39 und 40 durch einen Lackiervorgang derart aufgetragen, daß die Metallschichten 42 bzw. 43 in ihrer Mitte einen von Kunststoffschichten 39, 40 freien Bereich aufweisen und die Kunststoffschichten 39, 40 von diesem freien Bereich ausgehend bis über den Rand der Metallschichten 42 und 43 hinüberreichen.

Das breitere Band 41 wird dann längs von Schneidlinien 44 und 45 derart aufgeteilt, daß einzelne Bänder resultieren. Jeweils zwei solcher Bänder werden entsprechend der Anordnung nach Fig. 2 später miteinander verwickelt.

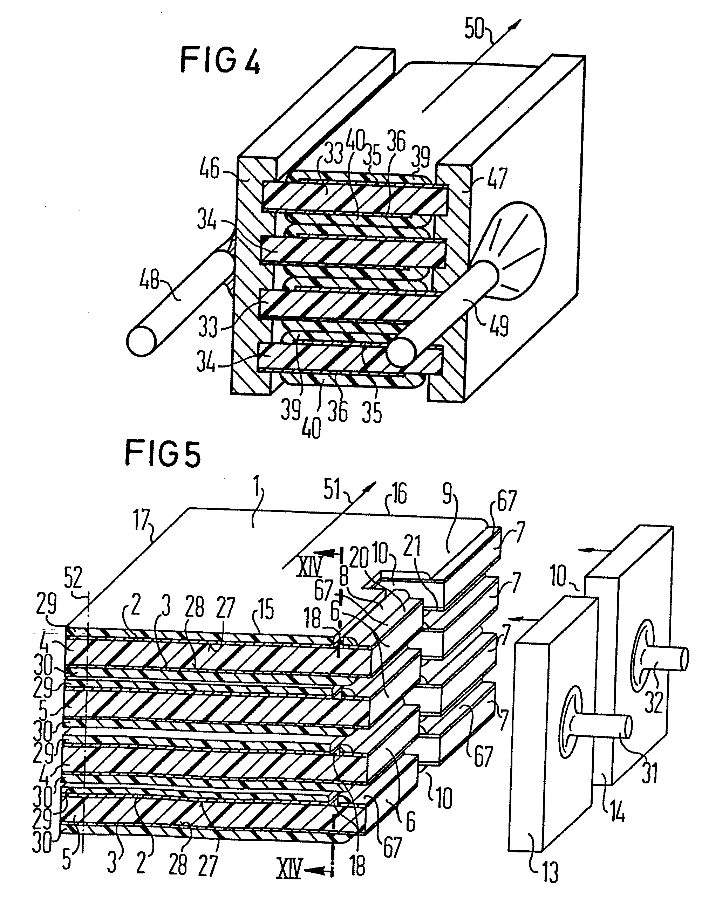

Die bekannten "TF-Capacitors" können beispielsweise nach einem Verfahren hergestellt werden, wie es in der bereits erwähnten US-PS 4 563 724 in den Spalten 2, Z. 16 bis 37 und in den Spalten 7, ab Z. 36 bis Spalte 8, Z. 46 erläutert ist, das heißt, daß die einzelnen die Kunststofflagen 33 und 34 liefernden Bänder nach entsprechender Vorbereitung auf die Trommel in Richtung des Pfeiles 50 (Fig. 4) aufgewickelt werden.

Fig. 4 zeigt, daß durch die im Schoop-Verfahren hergestellten Metallschichten 46 und 47 an den gegenüberliegenden Stirnflächen des Kondensators die Belegungen 35 rechts in der Zeichnung und die Belegungen 36 links in der Zeichnung elektrisch miteinander verbunden sind, so daß sowohl die Kunststofflagen 33 und 34, als auch die Lackschichten 39 und 40 im elektrischen Feld des Kondensators liegen. An den Schoopschichten 46 und 47 sind Stromzuführungsdrähte 48 und 49 in geeigneter Weise befestigt, z.B. durch Löten oder durch Schweißen.

Man erkennt aus Fig. 4, daß die Stromzuführungsdrähte 48 und 49 parallel zur Wickelrichtung 50 verlaufen, und zwar ausgehend von einander gegenüberliegenden Stirnflächen des Kondensators.

Die Kondensatoren nach der vorliegenden Erfindung unterscheiden sich grundlegend von den zum Stand der Technik gehörenden Stapelkondensatoren mit extrem dünnen Dielektrikumsschichten, wie aus der nachfolgenden Beschreibung der Figuren 5 bis 18 hervorgeht.

Sofern in diesen Figuren Teile gezeigt sind, die einander entsprechen, so sind hierfür auch gleiche Bezugszeichen verwendet.

Fig. 5 zeigt nun, daß bei den Kondensatoren der vorliegenden Erfindung - im Gegensatz zu den bekannten Stapelkondensatoren mit extrem dünnen Dielektrikumsschichten auf den Belegungen - die Stromzuführungsdrähte 31 und 32 parallel zueinander und nur von einer Stirnfläche ausgehend verlaufen. Wie bei den in der bereits genannten US-PS 4 563 724 beschriebenen niederinduktiven Kondensatoren werden auch hier die die einzelnen Kunststofflagen 4 und 5 liefernden Bänder, wie später noch erläutert wird, so gewickelt, daß sie in Richtung des Pfeiles 51 verlaufen, wodurch die Stromzuführungsdrähte 31 und 32 im fertigen Kondensator senkrecht zur Wickelrichtung 51 angeordnet sind.

In Fig. 5 sind die im Schoop-Verfahren hergestellten Metallschichten 13 und 14 im Abstand von der Kontaktierungsstirnfläche gezeigt, um einerseits die Lage dieser Metallschichten 13 und 14 in Bezug auf den Kondensator zu verdeutlichen und um andererseits die Darstellung des konstruktiven Aufbaus dieses Kondensators nicht zu stören.

Man erkennt aus Fig. 5, daß im vorliegenden Fall zwei Kunststofflagen 4 sich mit zwei Kunststofflagen 5 abwechseln. Auf
den Oberflächen 27 und 28 dieser Kunststofflagen 4 und 5
sind die Belegungen 2 und 3 in Form regenerierfähig dünner
Metallschichten aufgetragen und bedecken die Oberflächen
27 und 28 vollständig, das heißt bis zur Schmalseite 17,
bis zu den Längsseiten 15 und 16 und bis zu den Enden 6 bzw.
7 der Vorsprünge 8 bzw. 9, die durch den Einschnitt 10 entstanden sind.

Oberhalb der Belegungen 2 und 3 sind die extrem dünnen
Kunststoffschichten 29 und 30 aufgetragen, im vorliegenden
Fall in der Weise, daß im Bereich der Vorsprünge 8 bzw. 9
diese Kunststoffschichten 29 und 30 nicht bis zu den Enden
6 bzw. 7 der Vorsprünge 8, 9 reichen.

Bei der Herstellung dieser Kondensatoren wurden durch einen Laserstrahl auf dem Vorsprung 8 von der oberen Seite
her metallfreie Isolierstreifen 18 erzeugt. Auf der diametral gegenüberliegenden unteren Seite der Kunststofflagen
4 und 5 wurden bei der Herstellung durch Laserstrahlen auf
den Vorsprüngen 9 von unten ebenfalls metallfreie Isolierstreifen 19 erzeugt. In beiden Fällen sind Restmetallstreifen 20 bzw. 21 entstanden. Die Metallschicht 13 verbindet
nun am Vorsprung 8 die Belegungen 3 miteinandern, während
die Metallschicht 14 am Vorsprung 8 die Metallbelegungen 2
miteinander verbindet.

An dieser Stelle sei vermerkt, daß die in den Fig. 5 und 6
gezeigten Zwischenräume zwischen den extrem dünnen Kunststoffschichten 29 und 30 im fertigen Kondensator selbstverständlich nicht vorhanden sind.

Die Grenzlinie 52 in den Fig. 5 und 6 soll die Möglichkeit
andeuten, daß die Belegungen 2 und 3 nur bis zu dieser Grenzlinie 52 reichen können, so daß zwischen den Enden der Belegungen 2 und 3 und der oberen Schmalseite 17 metallfreie Isolierstreifen vorhanden sind. Im einzelnen wird dies im Zusammenhang mit den Fig. 8 bis 10 näher erläutert werden.

Bei der Herstellung der metallfreien Isolierstreifen 18 und 19 mittels Laserstrahl wird im allgemeinen auch die extrem dünne Kunststoffschicht in diesem entmetallisierten Bereich durch die dabei auftretende Energie beseitigt. Dieser Zustand wird hier dadurch beschrieben, daß die extrem dünnen Kunststoffschichten 29, 30 oberhalb der Isolierstreifen 18, 19 wenigstens teilweise entfernt sind.

Bei Fig. 6 sind aus Gründen der Übersichtlichkeit die in Fig. 5 gezeigten Metallschichten 13 und 14 mit den Stromzuführungsdrähten 31 und 32 weggelassen.

Beim Kondensator nach Fig. 6 werden nachfolgend nur die Unterschiede gegenüber dem Kondensator nach Fig. 5 erläutert.

Ein Unterschied besteht darin, daß bei der obersten Kunststofflage 4 durch den auf dem Vorsprung 9 gestrichelt dargestellten metallfreien Isolierstreifen 53, der auch auf der Unterseite des Vorsprunges 9 der obersten Kunststofflage 4 vorhanden ist, diese oberste Kunststofflage als Decklage wirkt, weil auch auf ihrem Vorsprung 8 auf beiden Seiten metallfreie Isolierstreifen 18 und 19 vorhanden sind. Dadurch werden die Metallbelegungen 2 und 3 dieser obersten Kunststofflage 4 elektrisch nicht an die Metallschichten 13 und 14 angeschlossen. Im einzelnen ist diese Art der Herstellung von Decklagen in der bereits erwähnten DE-OS 35 17 243 beschrieben.

Ein weiterer Unterschied des Kondensators nach Fig. 6 gegenüber dem Kondensator nach Fig. 5 besteht darin, daß jeweils auf der Kunststofflage 4 sowohl der erste metallfreie Isolierstreifen 18 als auch der zweite metallfreie Isolier-

streifen 19 sich zu beiden Seiten des Vorsprunges 8 der Kunststofflage 4 befinden, während jeweils auf der nächsten Kunststofflage 5 sowohl der erste Isolierstreifen 18 als auch der zweite Isolierstreifen 19 sich zu beiden Seiten des anderen Vorsprunges 9 befinden.

Ein weiterer Unterschied besteht darin, daß die extrem dünnen Kunststoffschichten 29 und 30 bis zu den Enden 6 und 7 der Vorsprünge 8 und 9 auf jeder Kunststofflage 4 und 5 reichen.

In den Fig. 7a und 7b sind zwei aufeinanderfolgende Kunststofflagen 4 und 5 mit den Belegungen 2 und 3 und den extrem dünnen Kunststoffschichten 29 und 30 hier zur besseren Anschaulichkeit weit auseinander gezogen gezeigt. Oberhalb der metallfreien Isolierstreifen 18 und 19 sind die durch den Laservorgang zumeist entstandenen Rillen durch weggeschleudertes Kunststoffmaterial deutlich zu erkennen. Die metallfreien Isolierstreifen 18 und 19, einander gegenüberliegend zu beiden Seiten der Vorsprünge 8 bzw. 9, können durch einen einzigen Laserstrahl erzeugt werden, der gleichzeitig mit der Bildung des metallfreien Isolierstreifens 18 durch die Folie hindurch den metallfreien Isolierstreifen 19 auf der Strahlausgangsseite ebenfalls streifenförmig beseitigt.

Die Enden 6 und 7 der Vorsprünge 8 und 9 sind bei den Fig. 7a und 7b als Wellenschnitt gezeigt, wobei zu erkennen ist, daß die Welligkeit bei der Kunststofflage 4 anders ist als die Welligkeit bei der Kunststofflage 5. Dadurch entstehen ausreichend Möglichkeiten, daß die Metalltropfen beim Schoop-Verfahren die Belegungen 2 und 3 besonders gut kontaktieren. Die Anwendung des Wellenschnittes ist, wie oben bereits erläutert, bekannt und auch in der bereits genannten DE-OS 35 10 518 beschrieben.

Die Ausführungsform nach den Fig. 6, 7a und 7b ist besonders vorteilhaft, weil nur die extrem dünnen Kunststoffschichten 29 und 30 im Feldraum liegen, während die Kunststofflagen 4 und 5 feldfrei bleiben. Ferner ist die Herstellung dieses Kondensators besonders einfach, weil die wesentlich breiteren Bänder bei ihrer Vorbereitung auf beiden Seiten vollständig mit Metall beschichtet werden können, darauf ebenfalls über die gesamte Breite hinweg die extrem dünne Kunststoffschicht aufgetragen werden kann und die metallfreien Isolierstreifen 18, 19 je Kunststofflage 4, 5 mit je einem Laserstrahl erzeugt werden können.

Besonders vorteilhaft ist diese Ausführungsform dann, wenn die extrem dünnen Kunststoffschichten 29 und 30 durch Glimmpolymerisation von Kunststoffen aus der Gasphase erzeugt werden und dabei Dielektrikumsschichten entstehen, die auch als plasmapolymere Schichten bezeichnet werden.

Anhand der Fig. 8 bis 12 sollen nun das Herstellungsverfahren und mögliche Varianten desselben erläutert werden.

Die Fig. 8 bis 10 zeigen, daß für die Herstellung der Kondensatoren nach der Erfindung, wie es an sich hinreichend bekannt ist, breite Kunststoffbänder 54 verwendet werden, deren Breite ein Vielfaches der später für die Kondensatoren erforderlichen Breite beträgt. Das Kunststoffband 54 wird gemäß Fig. 8 auf beiden Seiten nach an sich bekannten Verfahren mit regenerierfähig dünnen Metallschichten 55 und 56 versehen.

Auf derartig vorbereitete Bänder können, wie es Fig. 10 zeigt, nunmehr durch einen Lackierungsvorgang oder durch Glimmpolymerisation über die gesamte Breite die extrem dünnen Kunststoffschichten 57 und 58 aufgetragen werden.

Andererseits ist es möglich (Fig. 9a und 9b), extrem dünne Kunststoffschichten in Form von in Längsrichtung des Bandes 54 verlaufenden und Zwischenflächen 59 und 60 freilassenden Streifen 61 und 62 aufzutragen und das Band 54 dann in den Mitten 63, 64 der Zwischenflächen 59, 60 in einzelne Bänder 65 und 66 aufzuteilen, die von den Kunststoffschichten 29, 30 freie Randbereiche 67 enthalten.

Wenigstens zwei solcher Bänder 65 und 66 werden, wie nachfolgend noch beschrieben wird, zu Mutterkondensatorenringen oder zu aus mehreren Mutterkondensatorringen bestehenden Ausgangskondensatoren verwickelt. Während dieses Wickelvorganges wird mittels Laserstrahl in den Isolierstreifenbereichen 68 und 69, die durch aus Strichen und Kreuzen bestehende Linien gekennzeichnet sind, später die metallfreien Isolierstreifen 18 und 19 erzeugt.

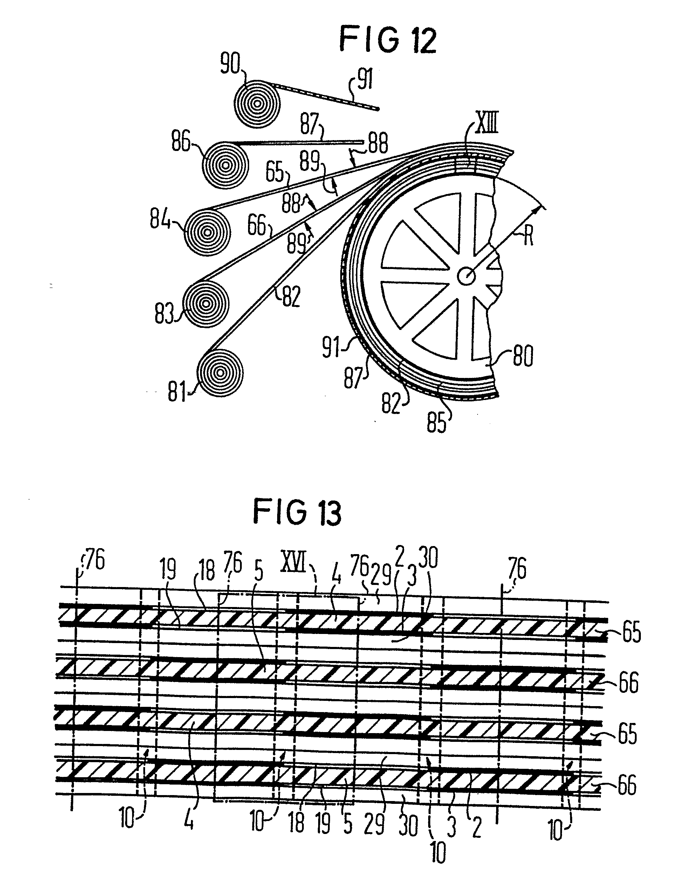

In etwa entsprechen die beiden übereinander zu wickelnden Bänder 65 und 66 den in Fig. 11 gezeigten Bändern.

In Fig. 10 sind ebenfalls zwei breite Kunststoffbänder 54 gezeigt, von denen jedes beidseitig mit Metallschichten 55 und 56 und darauf ebenfalls beidseitig vollständig mit extrem dünnen Kunststoffschichten 57 und 58 belegt sind.

Durch Aufteilung längs von Schneidlinien 70 und 71 in Bandlaufrichtung entstehen jeweils zwei Bänder 65 und 66, wobei hier der Abstand zwischen den Schneidlinien 70 und 71 nunmehr beliebig und für die später erwünschte Breite variierbar gewählt werden kann. Schneidtoleranzen bezüglich einer Schneidlinie, die innerhalb von in Folienlängsrichtung verlaufenden metallfreien oder von Glimmpolymerisat durch Abdeckung freien Streifen verläuft, brauchen hierbei nicht mehr eingehalten zu werden.

Auch in Fig. 10 sind die Isolierstreifenbereiche 68 und 69 eingezeichnet, die aber auch noch näher an den Schneidlinien 70 und 71 angeordnet sein können, wodurch die kapazitiv wirksame Fläche vergrößert wird.

In den Fig. 8, 9a, 9b und 10 sind im linken Teil jeweils auch noch isolierende Zwischenflächen 72 zwischen Metallstreifen gezeigt, die dann erforderlich sind, wenn an der oberen Schmalseite 17 des verfestigten Stapels 1 die bei den Fig. 5 und 6 beschriebenen metallfreien Isolierstreifen bis zur Grenzlinie 52 erforderlich sind, nämlich wenn längs dieser Schmalseite ein isolierender Sägeschnitt nicht durchgeführt wird und/oder wenn an dieser Schmalseite gegebenenfalls zur weiteren Erhöhung der Festigkeit des verfestigten Stapels 1 auch eine Metallschicht mittels Schoop-Verfahren aufgetragen werden soll.

Auf das breite Band 54 wird in diesem Fall die aufzutragenden Metallschichten 55, 56 in Form von in Längsrichtung des Bandes 54 verlaufenden und Zwischenflächen 72 freilassenden Streifen aufgetragen, die einander gegenüberliegen, und das Band 54 dann in den Mitten 73 der Zwischenflächen 72 und in den Mitten zwischen zwei Zwischenflächen 72 in einzelne Bänder 65 und 66 aufgeteilt wird, wobei diese Mitten zwischen den Zwischenflächen 72 (vgl. Fig. 9b) den Mitten 63 bzw. 64 der Zwischenflächen 60 bzw. 61 oder (vgl. Fig. 10) den Schneidlinien 70 und 71 entsprechen können. In der Nähe der metallfreien Streifen 72 werden selbstverständlich keine metallfreien Isolierstreifen 18 bzw. 19 erzeugt. Es könnte aber auch sein, wenn die genannten Voraussetzungen bezüglich des Erfordernisses von Isolierstreifen im Bereich der oberen Schmalseite 17 des verfestigten Stapels 1 vorliegen, daß bei bis zu dieser Schmalseite durchgehender Metallisierung beidseitig durchgehende metallfreie Isolierstreifen erzeugt werden, wie dies im Zusammenhang mit der Herstellung von Decklagen bereits erläutert ist, während an der anderen Bandseite die intermittierenden metallfreien Isolierstreifen erzeugt werden. Auch in einem solchen Fall könnte an der oberen Schmalseite 17 eine Metallschicht durch das Schoop-Verfahren hergestellt werden oder wäre ein isolierender Sägeschnitt nicht erforderlich.

In Fig. 11, die praktisch der Fig. 6 der US-PS 4 563 724 in Verbindung mit deren Fig. 3 entspricht und für die auch die Erläuterungenn des dortigen Verfahrens gelten (vgl. Spalte 8, ab Z. 42 bis Spalte 9, Z. 42 und Spalte 10, Z. 36 bis 62), ist ein oberes metallisiertes Band 65 und ein unteres metallisiertes Band 66 gezeigt. Beide Bänder sind in diesem Fall jeweils an beiden Rändern mit Wellenschnittkanten 74 und 75 versehen. Bei oder kurz vor dem Aufwickeln dieser beiden Bänder 65 und 66, das im Zusammenhang mit Fig. 12 erläuter wird, werden die intermittierenden metallfreien Streifen 18 und 19 durch Anwendung von Laserstrahlen erzeugt, und zwar auf jedem Band entweder nur auf einer Seite oder auf jedem Band gleichzeitig von beiden Seiten und einander gegenüberliegend, wie dies im Zusammenhang mit den Fig. 5 und 6 bereits erläutert ist.

Die Abstände der intermittierenden metallfreien Isolierstreifen voneinander sind derart bemessen, daß durch einen Einschnitt 10 in den fertigen Mutterkondensator und durch Aufteilen dieses Mutterkondensators entlang von Trennlinien 76, die quer zur Wickelrichtung verlaufen und einer Trennlinie 77, die in Wickelrichtung des Bandes verläuft, die beschriebenen Vorsprünge 8 und 9 entstehen.

Es ist in Fig. 11 auch gezeigt, daß an den durch die Wellenschnittkanten 74 und 75 gebildeten Stirnseiten des Mutterkondensators die für die Kontaktierung und die Anbringung der äußeren Stromzuführungen 31 und 32 erforderlichen Metallschichten 13 und 14 im Schoop-Verfahren aufgetragen sind.

In Fig. 11 ist ferner die Breite 78 der Bänder 65 und 66 eingezeichnet, wodurch erkennbar ist, daß je Abtrennung an den Trennlinien 76 zwei Kondensatoren entstehen, die an der Trennlinie 77 in Einzelkondensatoren aufgeteilt werden.

Werden, wie es im Zusammenhang mit den Fig. 8 bis 10 beschrieben ist, metallfreie Isolierstreifen als Zwischenflächen 72 erzeugt und wird in den Mitten 73 dieser Zwischenflächen 72 aufgeteilt, dann resultieren Bänder einer Breite 79, die unter Vernachlässigung des Schneidverlustes durch Sägen nur halb so groß wie die Breite 78 ist, so daß der Mutterkondensator nur längs der Trennlinien 76 aufgeteilt zu werden braucht.

Bei der Trennung längs der Trennlinien 76 und 77 wird ein sogenannter isolierender Sägeschnitt vollzogen, durch den die notwendige Randisolation erzeugt wird, wie es an sich bekannt ist. Gleiches gilt für die Randisolation im Bereich des Einschnittes 10.

In Fig. 12 ist ein Wickelrad 80 gezeigt, dessen Radius R in der Praxis eine Länge von 25 bis über 50 cm betragen kann.

Es ist ferner gezeigt, daß auf das Wickelrad 80 von der Vorratsrolle 81 zunächst eine untere Decklage 82 und dann von den Vorratsrollen 83 und 84 das untere metallisierte Kunststoffband 66 und das obere metallisierte Kunststoffband 65 aufgewickelt wurden, bis ein Mutterkondensatorring 85 entstanden ist, auf den von der Vorratsrolle 86 die obere Decklage 87 aufgewickelt wurde.

Anstelle der unteren und oberen Decklagen 82 und 87 können natürlich auch Decklagen erzeugt werden, wie es bereits beschrieben ist, indem wenigstens für eine Umdrehung des Wickelrades 80 auf den Bändern 65 und 66 durchgehend metallfreie Isolierstreifen erzeugt werden.

0259630

Während des Aufwickelns der Bänder 65 und 66 werden durch Synchronsteuerung von Laserimpulsen die intermittierenden metallfreien Isolierstreifen 18 und 19 erzeugt, indem durch die Umdrehung des Wickelrades 80 programmgesteuert entsprechende in der Zeichnung nicht dargestellte, aber an sich bekannte Vorrichtungen Laserstrahlen 88 und 89 auf die Bänder 65 und 66 richten. Dabei wirken die Laserstrahlen 88 jeweils im Bedarfsfall von oben her auf die Bänder 65 und 66 ein, während die Laserstrahlen 89 dementsprechend von unten her auf die Bänder 65 und 66 einwirken. Bei der im Zusammenhang mit Fig. 6 beschriebenen Ausführungsform des Kondensators genügt jeweils nur ein Laserstrahl 88, der von einer Seite her gleichzeitig oberhalb und unterhalb eines jeden Bandes die metallfreien Isolierstreifen erzeugen, sofern die Kunststoffbänder 65 und 66 für Laserstrahlen durchlässig sind, wie beispielsweise Polyethylenterephthalat oder Polypropylen.

Auf die obere Decklage 87 wurde dann von der Vorratsrolle 90 eine Trennlage 91 aufgewickelt, so daß dann erneut mit der Herstellung eines weiteren Mutterkondensatorringes begonnen werden kann, wie dies in Fig. 12 dargestellt ist. Dieser Vorgang kann so oft wiederholt werden, bis ein aus mehreren Mutterkondensatorringen bestehender Ausgangskondensator entstanden ist. Noch auf dem Wickelrad 80 werden die Stirnflächen der Mutterkondensatoren in einem Arbeitsgang vollständig mit Metallschichten im Schoop-Verfahren versehen. Erst dann werden die einzelnen Mutterkondensatorringe 85 entlang den Trennlagen 91 vom Ausgangskondensator abgenommen und wie bekannt verarbeitet.

Fig. 13 zeigt den Ausschnitt XIII in Fig. 12 aus dem Mutterkondensator 85, wobei die Decklagen 82 und 87 weggelassen wurden und auch auf die Darstellung der Krümmung verzichtet wurde, weil die Länge dieses Ausschnittes im Verhältnis zum Radius des Wickelrades 80 in Wirklichkeit äusserst gering ist.

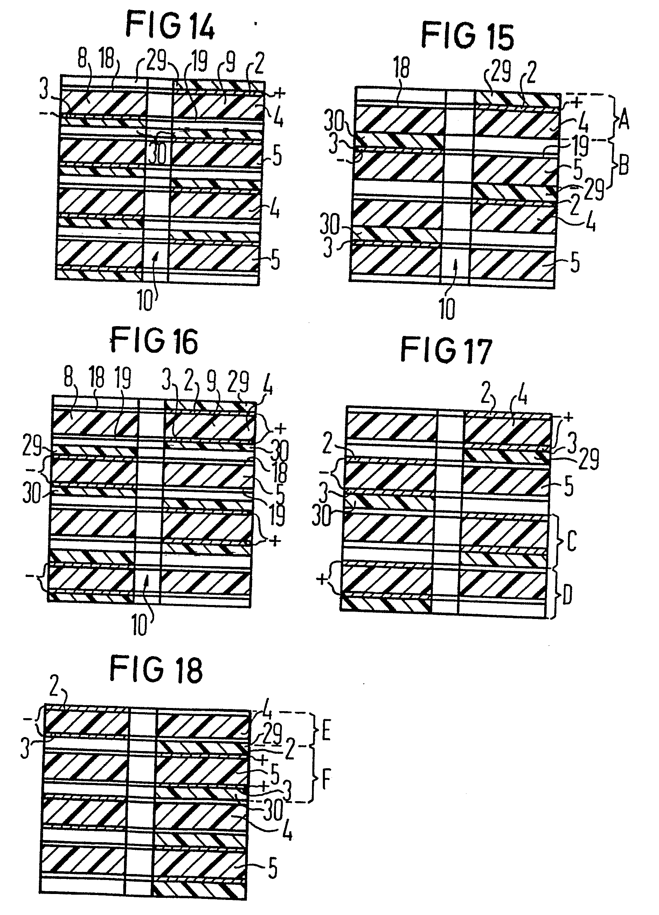

Der Ausschnitt XIII zeigt einen Schnitt entsprechend einer Ebene, die in Fig. 6 durch die Linie XVI - XVI bezeichnet ist. Man erkennt die oberen und unteren metallisierten Kunststoffbänder 65 und 66, die im Ausschnitt XVI, der durch die Schneidlinien 76 (vgl. Fig. 11) begrenzt ist, die Kunststofflagen 4 und 5 mit den Belegungen 2 und 3 und den extrem dünnen Kunststoffschichten 29 und 30 bilden. Der Ausschnitt XVI wird zusammen mit der Fig. 16 näher erläutert.

In Fig. 13 sind auch die später anzubringenden Einschnitte 10 eingezeichnet, so daß man erkennt, daß die metallfreien Isolierstreifen 18 und 19 stets bis etwa in die Mitte dieser später anzubringenden Einschnitte 10 reichen. Diese Einschnitte bewirken dann, daß die Belegungen 2 und 3 von Lage zu Lage elektrisch voneinander isoliert sind.

Fig. 14 zeigt einen Schnitt in Fig. 5 in der durch die Linie XIV - XIV gegebenen Ebene. Dadurch, daß die metallfreien Isolierstreifen 18 und 19 an diametral einander gegenüberliegenden Seiten der Vorsprünge 8 und 9 sich befinden und die eng schraffiert gezeichneten Belegungen 2 und 3 geschnitten sind, woraus hervorgeht (vgl. Fig. 5), daß diese Belegungen 2 bzw. 3 an den Enden 6 bzw. 7 der Vorsprünge 8 bzw. 9 durch die Metallschichten 13 bzw. 14 elektrisch untereinander verbunden sind, liegen sowohl die Kunststofflagen 4 und 5 als auch die Kunststoffschichten 29 und 30 im Feld. Die Zeichen "+" und "-" geben die Polarität an.

Fig. 15 zeigt eine Ausführungsform, bei der die Kunststofflagen 4 und 5 jeweils nur von einer Seite mit Metallschichten als Belegungen 2, 3 und darauf befindlichen extrem dünnen Kunststoffschichten versehen sind. Die jeweiligen Bandeinheiten sind durch die Klammern A und B dargestellt. Bei

0259630

dieser Ausführungsform wird das Dielektrikum zwischen den Belegungen 2 und 3 durch die Kunststofflage 4 und die dünne Kunststoffschicht 30 gebildet. Entsprechendes gilt für die Kunststofflage 5 und die dünne Kunststoffschicht 29. Diese Ausführungsform wird hier zur Vervollständigung der Möglichkeiten dargestellt, obwohl sie wegen der Aufeinanderschichtung einer sehr dünnen auf eine relativ dicke Dielektrikumsschicht nicht besonders vorteilhaft ist, für gewisse Fälle jedoch eingesetzt werden kann.

Fig. 16 zeigt einen Schnitt durch Fig. 6 in einer durch die Linie XVI - XVI gegebenen Ebene. Es handelt sich hier um die bevorzugte Ausführungsform, denn hier liegen, wegen der engen Schraffur der Belegungen 2 und 3 deutlich erkennbar, die Kunststofflagen 4 und 5 im feldfreien Raum, während nur die beiden extrem dünnen Dielektrikumslagen 29 und 30 im Feldraum sich befinden. Dies kommt dadurch, daß die metallfreien Isolierstreifen 18 und 19 sich bei jeder Kunststofflage 4 bzw. 5 zu beiden Seiten des einen Vorsprunges 8 bzw. alternierend hierzu des anderen Vorsprunges 9 sich befinden. Auch in Fig. 16 sind die Polaritäten durch die Zeichen "+" und "-" dargestellt.

Fig. 17 unterscheidet sich von Fig. 16 nur dadurch, daß auf jeder Kunststofflage 4, 5 nur zu einer Seite oberhalb der Belegungen 2, 3 extrem dünne Kunststoffschichten 29, 30 angeordnet sind. Die jeweiligen Bandeinheiten sind durch die Klammern C und D dargestellt. Da auch hier die Kunststofflagen 4, 5 sich im feldfreien Raum befinden, wird eine noch höhere Volumenkapazität erzielt.

Man kann die Fig. 16 und 17 auch dahingehend betrachten, daß bei Fig. 16 die Dicke der extrem dünnen Kunststoffschichten 29 und 30 nur halb so groß ausgeführt ist als die extrem dünne Kunststoffschichten 29 und 30 in Fig. 17. Die vorzugsweise durch Glimmpolymerisation erzeugten extrem dünnen Kunststoffschichten 29 und 30 sind dann gewissermaßen in zwei Teilschichten aufgetrennt, von denen jeweils ein Teil einer Kunststofflagenoberfläche zugeordnet ist. Bezogen auf gleiche Betriebsspannung haben die durch Glimmpolymerisation erzeugten extrem dünnen Einzelschichten der Kunststoffschichten 29, 30 nur die Hälfte der Dicke dieser Schichten gemäß Abbildung 17, so daß eine bessere Kontaktierung möglich ist, da die Schoop-Partikel die vergleichsweise noch dünneren Kunststoffschichten noch leichter durchschlagen können. Außerdem wird durch das nunmehr doppellagige Dielektrikum eine wesentlich bessere Durchschlagsfestigkeit und Isolation des Kondensators erreicht.

Wirtschaftlich gesehen bedeutet die Aufteilung einer dünnen Kunststoffschicht in zwei um die Hälfte dünnere Schichten praktisch keinen Mehraufwand, da die Fertigungsgeschwindigkeit für den Prozeß der Glimmpolymerisation proportional zur Dicke der Kunststoffschichten ist. Das heißt, daß die halbierte Kunststoffschicht einen zweifach so schnellen Fertigungsdurchlauf wie eine doppelt so dicke Einzelschicht ermöglicht.

Fig. 18 zeigt eine andere Variante des Aufbaus nach Fig. 17. Die obere Kunststofflage 4 enthält nur Belegungen 2 und 3 (Klammer E), die zu beiden Seiten des Vorsprunges 8 einander gegenüberliegend angeordnet sind. Die Kunststofflage 5 enthält oberhalb der Belegungen 2 und 3 die extrem dünnen Kunststoffschichten 29 und 30 (Klammer F).

Es wechseln somit bei dieser Ausführungsform Bänder, die beidseitig nur metallisiert sind, mit Bändern, die oberhalb der beidseitigen Metallisierung die extrem dünnen Kunststoffschichten enthalten, ab. Bei dieser Ausführungsform befinden sich die Kunststofflagen 4 und 5 im feldfreien Raum, während sich die extrem dünnen Kunststoffschichten 29 und 30 im Feldraum befinden.

0259630

Die in den Fig. 14 bis 18 dargestellten Möglichkeiten des Aufbaus solcher Kondensatoren ergeben gegenüber den bekannten Stapelkondensatoren mit Lackschichten oder Glimmpolymerisatschichten nicht nur eine erhöhte Volumenkapazität, sondern ermöglichen eine besonders einfache Herstellung der Kondensatoren nach der Erfindung.

Anlagen
Bezugszeichenliste
13 Patentansprüche
18 Figuren

1 verfestigter Stapel
2 Belegung
3 Belegung
4 Kunststofflage
5 Kunststofflage
6 Ende des Vorsprunges 8
7 Ende des Vorsprunges 9
8 Vorsprung der Kunststofflage 4
9 Vorsprung der Kunststofflage 5

10 Einschnitt im verfestigten Stapel 1
11 Fläche am Ende des Vorsprunges 8
12 Fläche am Ende des Vorsprunges 9
13 Metallschicht (Schoopschicht) auf der Fläche 11
14 Metallschicht (Schoopschicht) auf der Fläche 12
15 Längsseite des Stapels 1
16 Längsseite des Stapels 1
17 obere Schmalseite des Stapels 1
18 metallfreier Isolierstreifen
19 metallfreier Isolierstreifen

20 Restmetallstreifen
21 Restmetallstreifen
22 Tiefe des Einschnittes 10
23 Breite der Restmetallstreifen 20, 21
24 innerer Rand des Isolierstreifens 18
25 innerer Rand des Isolierstreifens 19
26 Längsachse des Stapels 1
27 Oberfläche der Kunststofflagen 4, 5
28 Oberfläche der Kunststofflagen 4, 5
29 extrem dünne Kunststoffschicht

30 extrem dünne Kunststoffschicht
31 äußere Stromzuführung
32 äußere Stromzuführung

33  Kunststofflagen (Stand der Technik)
34  Kunststofflagen (Stand der Technik)
35  Belegungen
36  Belegungen
37  metallfreie Isolierstreifen
38  metallfreie Isolierstreifen
39  Lackschichten als Dielektrikum

40  Lackschichten als Dielektrikum
41  breites Band
42  Metallschichten
43  Metallschichten
44  Schneidlinie
45  Schneidlinie
46  Schoop-Schichten
47  Schoop-Schichten
48  Stromzuführungsdraht
49  Stromzuführungsdraht

50  Wickelrichtung (Stand der Technik)
51  Wickelrichtung (Erfindung)
52  Grenzlinie
53  metallfreier Isolierstreifen
54  breites Kunststoffband
55  regenerierfähig dünne Metallschicht
56  regenerierfähig dünne Metallschicht
57  extrem dünne Kunststoffschicht
58  extrem dünne Kunststoffschicht
59  Zwischenflächen

60  Zwischenflächen
61  Kunststoffstreifen
62  Kunststoffstreifen
63  Mitten der Zwischenflächen 60
64  Mitten der Zwischenflächen 61
65  einzelne, obere Bänder

0259630

66 einzelne, untere Bänder

67 freie Randbereiche

68 Isolierstreifenbereiche

69 Isolierstreifenbereiche

70 Schneidlinien

71 Schneidlinien

72 Zwischenflächen zwischen Metallstreifen

73 Mitten der Zwischenflächen 72

74 Wellenschnittkanten an den Rändern des oberen Bandes 65

75 Wellenschnittkanten an den Rändern des unteren Bandes 66

76 Trennlinien quer zur Wickelrichtung 51

77 Trennlinie in Wickelrichtung 51

78 Breite der Bänder 65, 66

79 andere Breite der Bänder 65, 66

80 Wickelrad

81 Vorratsrolle für die unteren Decklagen 82

82 untere Decklage

83 Vorratsrolle für das untere Band 66

84 Vorratsrolle für das obere Band 65

85 Mutterkondensatorring

86 Vorratsrolle für die oberen Decklagen 87

87 obere Decklage

88 Laserstrahl

89 Laserstrahl

90 Vorratsrolle für die Trennlage 91

91 Trennlage

## Patentansprüche

1. Elektrischer Kondensator aus einem verfestigten Wickel oder einem verfestigten Stapel (1) von mit regenerierfähig dünnen Schichten aus Ventilmetall als Belegungen (2,3) versehenen, aneinandergeschichteten Kunststofflagen (4,5)

- bei dem die Belegungen (2,3) von Lage zu Lage abwechselnd bis zu den Enden (6,7) von zwei Vorsprüngen (8,9) reichen, die durch einen Einschnitt (10) entstanden sind, der in Richtung der Dicke des Wickel oder des Stapels (1) und etwa in der Mitte einer Seite desselben verläuft,

- bei dem die von den Enden (6,7) der Vorsprünge (8,9) im verfestigten Wickel oder im verfestigten Stapel (1) gebildeten Flächen (11,12) mit zur Kontaktierung dienenden und durch Metallspritzen hergestellten Metallschichten (13,14) versehen sind, die die Belegungen (2,3) miteinander verbinden und zum Befestigen äußerer Stromzuführungen (31, 32) dienen,

- bei dem die Belegungen (2,3) die Flächen der Kunststofflagen (4,5) praktisch bis zu den Rändern an den Längsseiten (15,16) sowie bis zu den beiden Enden (6,7) der Vorsprünge (8,9) und gegebenenfalls bis zum Rand der oberen Schmalseite (17) des Stapels (1), die der den Einschnitt (10) enthaltenden Schmalseite gegenüberliegt, bedecken,

- bei dem die Vorsprünge (8,9) alternierend von Kunststofflage (4) zu Kunststofflage (5) mit metallfreien Isolierstreifen (18,19) und Restmetallstreifen (20,21) versehen sind und

- bei dem die Tiefe (22) des Einschnittes (10) entweder größer ist als die Breite (23) der Restmetallstreifen (20,21) oder vorzugsweise mit den inneren Rändern (24,25) der Isolierstreifen (18,19) zusammenfällt oder über diese Ränder (24,25) hinaus in den Wickel oder in den Stapel (1) in Richtung seiner Längsachse (26) hineinreicht,

0259630

g e k e n n z e i c h n e t   durch folgende Merkmale:

a) auf beiden Oberflächen (27,28) einer jeden Kunststofflage (4,5) sind regenerierfähig dünne Metallschichten
   als Belegungen (2,3) vorhanden und

b) auf einer oder auf beiden Belegungen (2,3) jeder
   Kunststofflage (4,5) oder auf beiden Belegungen (2,3) jeder zweiten Kunststofflage (4,5) ist eine extrem dünne
   Kunststoffschicht (29,30) als Dielektrikum vorhanden, die
   die Belegung vollständig bedeckt, sich bis in den Bereich
   der Restmetallstreifen (20,21) erstreckt und oberhalb
   der Isolierstreifen (18,19) wenigstens teilweise entfernt ist.

2. Elektrischer Kondensator nach Anspruch 1,   d a d u r c h
g e k e n n z e i c h n e t ,   daß die extrem dünne Kunststoffschicht (29,30) durch einen Lackiervorgang hergestellt
ist und aus Acetylcellulose, Polycarbonat oder Epoxidharzlack  besteht.

3. Elektrischer Kondensator nach Anspruch 1,   d a d u r c h
g e k e n n z e i c h n e t ,   daß die extrem dünne Kunststoffschicht (29,30) durch Glimmpolymerisation hergestellt
ist und aus einer Mischung von perfluorierten und reinen
Kohlenwasserstoffen besteht.

4. Elektrischer Kondensator nach Anspruch 1,
d a d u r c h   g e k e n n z e i c h n e t ,   daß
die extrem dünne Kunststoffschicht (29,30) eine Dicke $(d_G)$
von 0.1 bis 2.0 µm, vorzugweise 0.7 µm, bei Lackschichten und
von 0.05 bis 0.7 µm, vorzugsweise 0.2 µm, bei Glimmpolymerisationsschichten aufweist.

5. Elektrischer Kondensator nach Anspruch 1,
d a d u r c h   g e k e n n z e i c h n e t ,   daß die
Kunststofflagen (4,5) eine Dicke $(D_L)$ von 1 bis 15 µm, vorzugsweise 2 µm, aufweisen.

6. Elektrischer Kondensator nach Anspruch 1, d a d u r c h   g e k e n n z e i c h n e t , daß auf jeder Kunststofflage (4,5) die ersten Isolierstreifen (18) auf einem Vorsprung (8) und die zweiten Isolierstreifen (19) auf der diametral entgegengesetzten Seite des anderen Vorsprunges (9) sich befinden.

7. Elektrischer Kondensator nach Anspruch 1, d a d u r c h   g e k e n n z e i c h n e t , daß jeweils auf einer Kunststofflage (4) sowohl der erste Isolierstreifen (18) als auch der zweite Isolierstreifen (19) sich zu beiden Seiten des einen Vorsprunges (8) befinden, während jeweils auf der nächsten Kunststofflage (5) sowohl der erste Isolierstreifen (18) als auch der zweite Isolierstreifen (19) sich zu beiden Seiten des anderen Vorsprunges (9) befinden.

8. Elektrischer Kondensator nach Anspruch 1, d a d u r c h   g e k e n n z e i c h n e t , daß die extrem dünne Kunststoffschicht (29,30) bis zu den Enden (6,7) der Vorsprünge (8,9) reicht und die Schnittkante der Vorsprünge (8,9) wenigstens an jeder zweiten Kunststofflage (4,5) als Wellenschnitt ausgeführt ist.

9. Elektrischer Kondensator nach Anspruch 1, d a d u r c h   g e k e n n z e i c h n e t , daß auf jeder Kunststofflage (4,5) die Belegungen (2,3) nicht bis an die obere Schmalseite (17) reichen und damit einen Isolierstreifen bis zu einer Grenzlinie (52) freilassen.

10. Elektrischer Kondensator nach Anspruch 1, d a d u r c h   g e k e n n z e i c h n e t , daß der verfestigte Stapel (1) oberhalb seiner außen liegenden Kunststofflagen (4,5) mit je wenigstens einer Decklage versehen ist, die ebenso aufgebaut ist wie die Kunststofflagen, bei der jedoch jeweils auf beiden Seiten beider Vo

0259630

sprünge (8,9) Isolierstreifen vorhanden sind.

11. Verfahren zur Herstellung eines elektrischen Kondensators nach einem der vorangehenden Ansprüche, bei dem zwei regenerierfähig dünn metallisierte Bänder (65,66) als Kunststofflagen (4,5), insbesondere mit randseitigem Wellenschnitt, auf einer Trommel zu einem Ausgangskondensator geschichtet werden und der Ausgangskondensator senkrecht zu den Schichtebenen in die gewünschten Einzelkondensatoren aufgeteilt wird, wobei gegebenenfalls bei einer Anzahl jeweils einen Mutterkondensator (85) bildender Bänder (65,66) mit den Belegungen (2,3) kapazitiv nicht wirksame Decklagen (87), darauf Trennlagen (91) und erneut Decklagen (82) und darauf wieder die Bänder (65,66) mit den Belegungen (2,3) für den nächsten Mutterkondensator angeordnet werden und der so entstandene Ausgangskondensator mit Stirnkontaktschichten versehen und danach im Bereich der Trennlagen (91) und in dazu senkrechter Richtung geteilt wird, mit den Verfahrensschritten:

a) die beiden metallisierten Bänder (65,66) werden mittels Laserstrahlen (88,89) in den Bereichen (68,69) der Ränder und in Abständen hierzu in Wickelrichtung (51) mit intermittierenden metallfreien Isolierstreifen (18,19) vor oder beim Aufwickeln derart versehen, daß die Isolierstreifen (18,19) beim Aufwickeln auf die Trommel (80) in einer Ebene senkrecht zur Wickelachse liegen und sowohl die Enden als auch die Anfänge der Isolierstreifen bis in den Bereich des späteren Einschnittes (10) hineinreichen oder diesen Bereich geringfügig überschreiten,

b) die Bänder (65,66) werden beim Aufwickeln auf die Trommel so geführt, daß die Mitten der Isolierstreifen des oberen Bandes symmetrisch über den Mitten der Zwischenräume zwischen den Isolierstreifen des unteren Bandes in den fertigen Mutterkondensatoren (85) angeordnet sind,

c) nach dem Aufwickeln und Verfestigen der Ausgangskondensatoren bzw. Mutterkondensatoren (85) werden noch auf der Trommel (80) zumindest die aus den Rändern gebildeten Stirnflächen durch Metallsrpitzen mit je einer Metallschicht versehen,

d) vor oder nach dem Auftrennen in einzelne Mutterkondensaren werden senkrecht zur Wickelrichtung (51) in der Mitte zwischen je zwei Schneidlinien (76) von beiden Seiten des Mutterkondensators (85) Einschnitte (10) erzeugt, durch deren Breite und Tiefe (17) die beiden Vorsprünge (8,9) entstehen,

e) Abtrennen der einzelnen Kondensatoren, gegebenenfalls nach Befestigen von Stromzuführungen (31,32), durch isolierende Sägeschnitte sowohl längs von Schneidlinien (76), die durch die Mitten der Isolierstreifen (18,19) gehen, als auch längs einer Schneidlinie (77), die parallel zu den Rändern in der Mitte des Mutterkondensators (85) liegt,

f) Fertigstellung der Kondensatoren durch Anbringen von kappenförmigen oder anderen Stromzuführungen sofern diese nicht schon im Verfahrensschritt e) befestigt wurden, d a d u r c h g e k e n n z e i c h n e t , daß für die Kunststofflagen (4,5) wenigstens ein gegenüber der später erforderlichen Breite wesentlich breiteres Band (54) vorbereitet wird, in dem es beidseitig vollständig mit regenerierfähig dünnen Metallschichten (54,55) (Al oder Zn oder Legierungen hiervon) als Belegungen (2,3) versehen wird, wonach auf die gesamte Oberfläche wenigstens einer dieser Metallschichten (54,55) eine extrem dünne Kunststoffschicht (56,57) nach an sich bekannten Verfahren durch einen Lackiervorgang oder durch Glimmpolymerisation aufgetragen wird und dieses derart vorbereitete Band (54) dann in einzelne Bänder (65,66) mit der für das Trommelwickeln vorgesehenen Breite (78,79) durch in Bandrichtung verlaufende Schnitte (70, 71) geteilt wird, wofür vorzugsweise eine Schneidvorrichtung benutzt wird, die Wellenschnittkanten (74,75) erzeugt.

12. Verfahren nach Anspruch 11 zur Herstellung eines Kondensators nach Anspruch 1, d a d u r c h g e k e n n - z e i c h n e t , daß die auf wenigstens eine Metallschicht (54,55) aufzutragende, extrem dünne Kunststoffschicht in Form von in Längsrichtung des Bandes (54) verlaufenden und Zwischenflächen (59,60) freilassenden Streifen (61,62) aufgetragen wird und das Band (54) dann in den Mitten der Zwischenflächen (59,60) in die einzelnen Bänder (65,66) aufgeteilt wird, die von der Kunststoffschicht (29,30) freie Randbereiche (67) aufweisen.

13. Verfahren nach Anspruch 11 oder 12 zur Herstellung eines Kondensators nach Anspruch 9, d a d u r c h g e - k e n n z e i c h n e t , daß die auf das breite Band (54) aufzutragenden Metallschichten (55,56) in Form von in Längsrichtung des Bandes (54) verlaufenden und Zwischenflächen (72) freilassenden Streifen aufgetragen wird, die einander gegenüberliegen, und das Band (54) dann in den Mitten (73) der Zwischenflächen (72) und in der Mitte zwischen den Zwischenflächen (72) in die einzelnen Bänder (65,66) aufgeteilt wird.

FIG1

FIG2

FIG3

FIG 4

FIG 5

FIG 6

FIG 7a

FIG 7b

FIG 8

FIG 9a

FIG 9b

FIG 10

FIG 11

FIG 12

FIG 13

6/6

FIG 14

FIG 15

FIG 16

FIG 17

FIG 18

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | EP-A-0 144 857 (SIEMENS AG) <br> * Ansprüche 1,2,8-11 * <br> --- | 1,17 | H 01 G 4/30 <br> H 01 G 4/32 <br> H 01 G 4/14 |
| A,D | US-A-3 855 507 (SIEMENS AG) <br> * Spalte 5, Zeile 54 - Spalte 6, Zeile 39 * <br> --- | 1,2,11 | |
| A | EP-A-0 192 159 (SIEMENS AG) <br> * Anspruch 1 * <br> --- | 3 | |
| A | EP-A-0 026 933 (SIEMENS AG) <br> * Ansprüche 1,2 * <br> ----- | 3 | |

**RECHERCHIERTE SACHGEBIETE (Int. Cl.4)**

H 01 G

Der vorliegende Recherchenbericht wurde für alle Patentansprüche erstellt

| Recherchenort | Abschlußdatum der Recherche | Prüfer |
|---|---|---|
| DEN HAAG | 08-12-1987 | SCHUERMANS N.F.G. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)